(19) Europäisches Patentamt
European Patent Office
Office européen des brevets

(11) EP 3 547 572 A1

(12) EUROPEAN PATENT APPLICATION

(43) Date of publication:
02.10.2019 Bulletin 2019/40

(51) Int Cl.:
H04B 10/516 (2013.01)     H03M 7/40 (2006.01)
H04L 27/34 (2006.01)

(21) Application number: 18305381.8

(22) Date of filing: 30.03.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Nokia Solutions and Networks Oy
02610 Espoo (FI)

(72) Inventors:
• JARDEL, Fanny
70435 STUTTGART (DE)
• SCHMALEN, Laurent
70435 STUTTGART (DE)

(74) Representative: Nokia EPO representatives
Nokia Technologies Oy
Karakaari 7
02610 Espoo (FI)

(54) A METHOD FOR GENERATING OPTICAL SIGNAL, AND ASSOCIATED OPTICAL TRANSMITTER AND OPTICAL RECEIVER

(57)     A method for generating an optical signal, said optical signal comprising a sequence of bits, the method comprising the steps of:
- mapping a block of bits (103) from the sequence of bits to a codeword comprised in a codebook (309), said codebook (309) comprising codewords of variable length, said codeword corresponding uniquely to said block of bits,
- mapping the codeword to an index comprised in a set of indexes (301), the set of indexes being ordered according a probability of transmission of the codewords (501),
- mapping the index to a modulation symbol from a set of modulation symbols (505;507),
- modulating a carrier wavelength with the modulation symbol to generate the optical signal.

FIG. 1

EP 3 547 572 A1

**Description**

**FIELD OF THE INVENTION**

The present invention relates to optical network, in particular to the generation, the transmitting and the receiving of optical signals.

**BACKGROUND OF THE INVENTION**

Modern communication systems have been evolving to match the increasing demands in the delivery of digital content. Optical networks are instrumental in the distribution of data flows as they offer high capacity links.

As optical networks are more involved, an increase of their efficiency is needed. Practical coding scheme for modulations to achieve higher performances on optical channel is a field of improvement. Quality of digital transmission may be evaluated with the measurements of bit error probability "$P_{eb}$" as a function of the signal-to-noise ratio "SNR". For a given transmission data rate "R", expressed in bits per channel use "bpcu" or in bits per real dimension, the signal-to-noise ratio should be large enough to guarantee a vanishing error probability, for example inferior to $10^{-6}$. The Shannon's limit provides the highest achievable information rate in presence of additive white Gaussian noise, referred to as channel capacity "C", given by

$$C = \frac{1}{2} log_2 (1 + SNR) \, bpcu$$

For a fixed signal-to-noise ratio, the data rate R has to be inferior to C. For a fixed data rate R, such as R=C, constraint shifts to SNR:

$$SNR > (2^{2R} - 1)$$

Based on the channel capacity formula, it is possible to design a system with maximum achievable data rate R or equivalently that achieves the minimum SNR. Such a system, achieving a signal-to-noise ratio and a data rate as close as possible to the theoretical limits, is challenging to build.

A solution to reach the inherent limits of a communication system is to use constellation shaping techniques that allow to approach the Shannon's limit. Such techniques involve distribution of possible signal combinations that is not static. A first shaping technique may be achieved with a modulation directly built with a geometrical spherical shape that provides a non-uniform constellation. However, such shaping is difficult to implement effectively. A second shaping technique may be achieved by modulating symbols given a spherical shaped probability distribution. The symbols modulation are made non-equiprobable with a distribution that mimics a discrete Gaussian distribution. The discrete Gaussian distribution to be approximated by the symbols modulation, called Maxwell-Boltzmann "MB" distribution, is given by probability masses that are proportional to:

$$e^{-v|s|^2}$$

where $s$ is a symbol and $v$ is the MB distribution parameter.

The MB distribution applies on the symbol amplitude s and explain the term "amplitude" in Probabilistic Amplitude Shaping. The sign symbol is left to be arbitrarily chosen, as +1 and -1 are equiprobable for a given amplitude. This second shaping technique, is called Probabilistic Amplitude Shaping "PAS".

An important component in PAS schemes is the distribution matcher, which takes as input uniformly distributed bits (data sequences) and generates symbols belonging to a predefined set. The distribution matcher imposes the required probability distribution on symbols, in order to reach the information-theoretic capacity. The distribution matcher may be implemented with good performance when using long sequences of bits with a variant of arithmetic coding to generate constant composition codes that closely approach the entropy of the output distribution. A drawback such distribution matcher is that its implementation is difficult in high-speed communication systems as it is an inherently serial process, which requires massive parallelization at the optical receivers' side when operating at multiple of 100Gbit/s. The increased parallelization leads to higher latency and higher number of transistors.

It is therefore needed to find a practical implementation for the distribution matcher, which provides performances targeting near theoretical capacity and with limited complexity and costs.

## SUMMARY OF THE INVENTION

The invention aims to remedy all or some of the disadvantages of the above identified prior art. It particularly proposes generating an optical signal with a probabilistic amplitude shaping scheme.

A first aspect of the invention relates then to a method for generating an optical signal, said optical signal comprising a sequence of bits, the method comprising the steps of:

- mapping a block of bits from the sequence of bits to a codeword comprised in a codebook, said codebook comprising codewords of variable length, said codeword corresponding uniquely to said block of bits,
- mapping the codeword to an index comprised in a set of indexes, the set of indexes being ordered according a probability of transmission of the codewords,
- mapping the index to a modulation symbol from a set of modulation symbols,
- modulating a carrier wavelength with the modulation symbol to generate the optical signal.

Thus, thanks to these features, the sequence of bits is processed to generate the optical signal. The sequence of bits is separated into different blocks of bits, each block of bits is mapped to a codeword belonging to a codebook. Advantageously the codewords from the codebook have different length, making it possible to have a unique match between a block of bits and a codeword. As such the different block of bits have different lengths. The obtained codeword from the mapping operation is further mapped to an index belonging to a set of indexes. The set of indexes is ordered in a specific way to reflect the probability of transmission of the codewords, and by association to the probability of transmission of the block of bits. Advantageously the index mapped to the codeword reflects its likelihood of appearing into a transmission. The obtained index is then mapped to a modulation symbol. Advantageously the modulation symbol is produced in accordance of the mapping steps and presents then properties inherited from the codebook and the set of indexes. The modulation symbol is used then to modulate a carrier wavelength for generating the optical signal. The method allows then to generate an optical signal comprising modulation symbol with chosen specificities.

A second aspect of the invention relates then to an optical transmitter for transmitting a sequence of bits, said optical transmitter comprising a distribution matcher adapted for:

- mapping a block of bits from the sequence of bits to a codeword comprised in a codebook, said codebook comprising codewords of variable length, said codeword corresponding uniquely to said block of bits,
- mapping the codeword to an index comprised in a set of indexes, the set of indexes being ordered according a probability of transmission of the codewords,
- mapping the index to a modulation symbol,
- modulating a carrier wavelength with the modulation symbol to generate an optical signal,

the optical transmitter further comprising a transmitting module for transmitting the optical signal.

Thus, thanks to these features, the optical transmitter is adapted to generate an optical signal thanks to the distribution matcher. The distribution matcher processes the sequence of bits by segmenting it into blocks of bits, each block of bits being uniquely mapped to the codeword from the codebook. Advantageously the codebook comprises variable lengths codewords, each codeword being uniquely mappable to a variation of a sub-part of the sequence of bits.

A third aspect of the invention relates then to an optical receiver for receiving a block of bits, said optical receiver comprising:

- a demodulation unit for demodulating a portion of an optical signal into a demodulated symbol,
- mapping the demodulated symbol to an index comprised in a set of indexes, the set of indexes being ordered according a probability of transmission of codewords from a codebook, said codebook comprising codewords of variable length,
- mapping a codeword from the codebook to the index,
- mapping the codeword to the block of bits, said codeword corresponding uniquely to said block of bits.

Thus, thanks to these features, the optical receiver is adapted to decode the optical signal into the block of bits. Advantageously the codebook comprises variable lengths codewords, each codeword being uniquely mappable to a variation of a sub-part of the sequence of bits.

According to various embodiments, the method, the optical transmitter, and the optical receiver further comprise respectively one or more of the features below, which should be considered in any possible technical combinations:

- the step of mapping the codeword to the index further comprises the step of ordering the set of indexes according to a decreasing or increasing probability of transmission of each of the codewords from the codebook,

- the step of mapping the index to a modulation symbol further comprises the step of associating a set of weights to the set of modulation symbols, each weight of the set of weights corresponding to each of the modulation symbol of the set of modulation symbols, and said set of weights ordering the set of modulation symbols,
- the set of weights comprises ordered Hamming weights,
- the step of mapping the codeword to the index further comprises a step of partitioning the set of weights into at least a first subset of weights and a second subset of weights, the first subset of weights comprising the weights associated with higher probability of transmission of the codewords from the codebook, the second subset of weights comprising weights associated with lower probability of transmission of codewords from the codebook,
- the codewords from the codebook are determined according to an inverse Fibonacci encoding scheme,
- the number of codewords comprised in the codebook is equal to a power of 2,
- if a number of consecutive zero bits from the block of bits is greater than a threshold, a one bit is inserted after the consecutive zero bits,
- the codewords from the codebook are determined according to a Huffman encoding scheme,
- the number of codewords comprised in the codebook is equal to a power of 2.

## BRIEF DESCRIPTION OF THE FIGURES

Some embodiments of the present invention are now described, by way of example only, and with reference to the accompanying drawings, in which:

- FIG. 1 is a schematic block diagram of a constellation shaping system according to embodiments of the invention,
- FIG. 2 is a schematic block diagram of a distribution matcher according to embodiments of the invention,
- FIG. 3 is a table of a codebook according to an embodiment of the invention,
- FIG. 4 is a schematic diagram of a tree of set of codes corresponding to another codebook according to an embodiment of the invention,
- FIG. 5 is a table of index corresponding to a codebook according to an embodiment of the invention,
- FIG. 6 is a plot of probability distributions obtained according to embodiments of the invention.

The same reference number represents the same element to the same type of element on all drawings, unless stated otherwise.

## DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

In the following description of the figures, some elements designated with arrows are depicting either optical signals carried on waveguides or electrical signals carried on wired connections. The orientations of the arrows symbolize the propagation direction of the optical and/or electrical signals. Such schematic representations are non-limiting and serve only for the understanding of the invention.

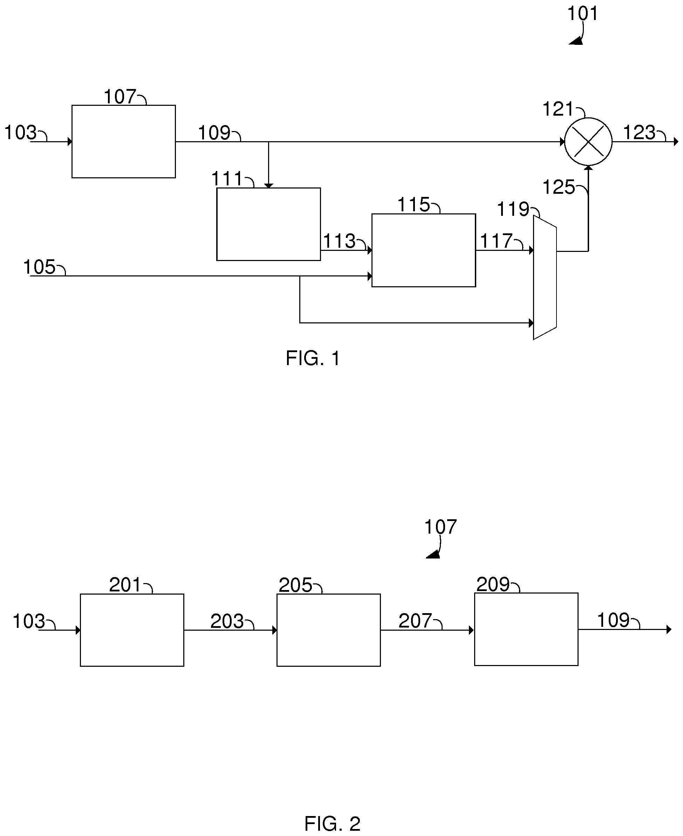

Referring to figure **FIG. 1,** a schematic block diagram of a constellation shaping system according to embodiments of the invention is depicted.

In an embodiment, an optical communication network comprises an optical transmitter 101. The optical communication network is an optical system for transporting data amongst optical nodes. The optical communication network is used for long haul data transport, either terrestrial or submarine in an example. The optical communication network may also be used in a metropolitan area network in a dense urban area, or in data centers for interconnecting data centers equipment or data centers nodes.

The optical transmitter 101 is incorporated into an optical node from the optical communication network. The optical transmitter 101 transmits optical signals on an optical waveguide or optical medium directed to an optical receiver from another optical node from the optical communication network. The optical waveguide is a multicore fiber in an example, and/or a monomode/multimode fiber in another example. In yet another example the optical transmitter 101 is a coherent wavelength division multiplexing transmitter, adapted to transmit informative data stream(s) on a plurality of wavelengths. In yet another example, the optical transmitter 101 is enabled to generate intensity modulated optical signals, and the corresponding optical receiver performs direct detection for recovering the data from the received intensity modulated optical signals.

In an embodiment, the optical transmitter 101 comprises:

- a distribution matcher 107, that receives informative data to be processed in order to distribute the constellation of corresponding symbols in a particular way,
- a symbol to binary mapper 111, that maps a symbol from a constellation of modulation symbols to a sequence of bits,
- a parity generator 115,
- a data multiplexer 119, that combines the flow of symbols outputted by the binary to symbol mapper 111 with the parity symbols outputted by the parity generator
- a data combiner 121 that multiplexes the symbols outputted by the distribution matcher 107 with the parity symbols outputted by the data combiner 119.

In an embodiment, the distribution matcher 107 receives informative data $U_1$ in the form of uniformly distributed input bits 103. This flow of binary data is processed by the distribution matcher 107 which generates $V_1$ symbols 109 belonging to a set $A=\{A_1, A_2,...,A_M\}$ where $M=2^{m-1}$ and m is the number of bits mapped to the constellation. The relationship of informative data U1 103 and V1 symbols 109 is as follows:

$$V_1 := \frac{U_1}{R_{DM}}$$

where RDM is the rate of the distribution matcher 107.

It is meant by mapping to the constellation, the correspondence between a sequence of m-bits and a real-valued symbols of a constellation of M reals symbols centered on the origin. In an example where the optical transmitter 101 operates an amplitude shift-keying 'ASK' modulation using a constellation shaping mechanism such as a probabilistic amplitude shaping, the set A comprising then a discrete amplitude $A_1$ to $A_M$. The terms constellation symbol and modulation symbol are used hereinafter with an equivalent meaning.

Advantageously, the distribution matcher 107 allows a probability distribution $P_A(A_i)$ on the symbols. Said probability distribution $P_A(A_i)$ is advantageously chosen such that the information-theoretic capacity is optimized.

The output rate of the distribution matcher (DM) 107 is defined as:

$$R_{DM} := \frac{U_1}{V_1} \leq H(A) = -\sum_{i=1}^{M} P_A(A_i) \log_2 P_A(A_i)$$

The optimization of the probability distribution $P_A$ is, in an example, yielding a rate of the distribution matcher 107 close to H(A) which is the entropy of the output distribution.

In an embodiment, the distribution matcher 107 outputs the non-uniformly distributed V1 symbols 109, which are provided to the data multiplexer 121 and to the symbol to binary mapper 111 in order to generate a parity binary flow 113 associated to said V1 symbols 109. The parity binary flow 113 is provided, with another parity binary flow $U_2$ 105 to the parity generator 115, in order to provide an associated parity sequence 117. The data multiplexer 119 further combines the associated parity sequence 117 with the initial the parity binary flow U2 105, and generates a parity control sequence 125. The data combiner 121 further combines the obtained parity control sequence 125 with the V1 symbols 109, and generates a parity protected symbols flow 123.

In examples, further signal processing operations are applied to the symbols flow 123 in order to include additional robustness in the optical signal to be generated by the optical transmitter 101. In examples these signals processing operations include forward-error correction encoding, impairments and non-linearity mitigation processing (digital pre-distortion, chromatic dispersion compensation, phase shift).

In an embodiment, an optical receiver is adapted for receiving the optical signal comprising the non-uniformly distributed symbols 109. The optical receiver comprises:

- a demodulation unit for demodulating a portion of the optical signal into a demodulated symbol,
- mapping the demodulated symbol to an index comprised in the set of indexes, the set of indexes being ordered according a probability of transmission of codewords from the codebook, said codebook comprising the codewords of variable length,
- mapping the index to the codeword from the codebook,

- mapping the codeword to the block of bits, said codeword corresponding uniquely to said block of bits.

The optical receiver is adapted to reconstruct the informative date U1 103 by assembling the produced block of bits. The optical receiver is configured with the same codebook and same set of indexes used for configuring the distribution matcher 107 of the optical transmitter 101. Said configuration of the optical receiver is performed by a network supervising entity in an example, or by control messages exchanged between the optical transmitter and the optical receiver in another example.

Referring to figure **FIG. 2,** a schematic block diagram of a distribution matcher according to embodiments of the invention is depicted.

In an embodiment, the distribution matcher 107 comprises a codeword encoder 201, an index mapper 205, and a constellation mapper 209.

The codeword encoder 201 receives uniformly distributed sequence of bits such as the informative data U1 103. During the processing of sequence of bits, the codeword mapper 201 determines a codeword from a codebook to be associated to said informative data U1 103. The codebook comprises a plurality of codewords, said codewords being of variable length. Furthermore, the codebook is such that the sequence of bits can be segmented in variable length sub-sets, each sub-set corresponding uniquely to a codeword from the codebook.

The codeword encoder 201 outputs a flow 203 comprising a plurality of codewords determined from the informative data U1 103. The flow 203 is then further processed by the index mapper 205.

The index mapper 205 receives the plurality of codewords outputted by the codeword encoder 201, which has associated for each portion or subset of the informative data U1 103, a codeword from the codebook.

The index mapper 205 comprises a set of indexes for mapping each received codeword to an index from said set of indexes. The index mapper 205 receives as input the flow 203 of codewords, and outputs the flow 207 of indexes.

In an embodiment, the set of indexes comprises indexes ordered according to a probability of transmission of the codewords. Each of the codewords from the codebook corresponds to a unique sequence or block of bits from the informative data U1 103. Amongst all the possible variants of the block of bits, of variable lengths, some block of bits are more likely to be transmitted than others. Probability of transmission of each possible block of bits is considered for ordering the set of indexes. In an example, the first index of the set of indexes corresponds to a highest probability of transmission of a block of bits associated uniquely to its codeword from the codebook. The following indexes in the set of indexes are then ordered according to the decreasing probability of transmission of the block of bits associated uniquely to codewords. In another example, the first index of the set of indexes corresponds to a lowest probability of transmission, and the following indexes in the set of index have an increasing probability of transmission, the last index being the most likely to be transmitted.

In an example the set of indexes and the ordering of the indexes is determined offline and then configured into the index mapper 205. In another example, the index mapper 205 determines probability of transmission of the block of bits by establishing statistics on the actual transmission.

In an example, the received codewords have variable length and define a sequence of codewords, said sequence being of variable length. By mapping each codeword to an index, the index mapper 205 transforms the sequence of codewords to a sequence of indexes. As said sequence of codewords has a variable length but has a known number of codewords, the index mapper 205 advantageously allows to produce a sequence of indexes comprising as many indexes as the known number of codewords. In an example, the set of indexes comprises indexes with the same length, therefore the produced sequence of indexes has also a known length.

In another example, the variable lengths of the received codewords, and the number of received codewords produces a variable number of indexes at the output of the index mapper 205. The index mapper 205 may be enabled to output a fixed number of indexes by using a variable-length shaping code to convert the block of bits into an output sequence of indexes or constellation symbols, the block of bits having a first fixed number of bits, and the output sequence of indexes or constellation symbols having a second fixed number of elements. Considering constraints of modern processing architecture, it is desirable that the distribution matcher 107 outputs fixed length blocks. The index mapper 205 is enabled to process variable length input blocks into fixed length output blocks. When the number of indexes generated by the index mapper 205 is lower than a chosen fixed length (or lower than the length of the input blocks), dummy filers can be added to complete the output blocks, in order to have their length constant. When the number of indexes generated by the index mapper 205 is greater than a chosen fixed length (or greater than the length of the input blocks), an overflow of the length is managed by the distribution matcher 107. In such case, the distribution matcher 107 uses first the configured codebook for converting the block of bits into codewords, and then into indexes. The distribution matcher 107 estimates the event of an overflow of length by computing on the fly the remaining available space and the required space. When the overflow is detected, the distribution matcher 107 uses an alternative codebook, for example a direct mapping of the block of bits into their decimal representation which provides a shorter fixed length output.

The constellation mapper 209 receives the flow 207 of indexes outputted by the index mapper 205, and further processes it in order to output the V1 symbols 109. For each index from the flow 207 of indexes, the constellation mapper 209 determines a constellation symbol comprised in the set of modulation symbols $A=\{A_1, A_2,...,A_M\}$. The constellation mapper 209 arranges the set of symbols so that each constellation symbol corresponds to an index.

In an example, an index from the set of indexes is converted into a binary representation, said binary representation being map directly to a constellation symbol. For example, considering a 8-ASK modulation techniques, the constellation symbols are represented with sequence of 3 bits: A={'000', '001', '010', '011', '100', '101', '110', '111'}. In such example, the index '1' from the set of indexes produced by the index mapper 205 is mapped to the constellation symbol '000', whereas the index '4' produced by the index mapper 205 is mapped to the constellation symbol '011'.

In another example, the constellation mapper 209 arranges the set of symbols in such a way that the distribution of the binary digits at the output of the constellation mapper 209 is changed. The set of symbols may be arranged according to a weighting algorithm that contributes to the modification of the distribution of the binary digits. Hamming weighting is an example of weights applied to the arrangement of the set of symbols. Advantageously the modification of the distribution of the binary digits, achieved for example thanks to the Hamming weighting, contributes to enable the distribution matcher 107 to output a non-uniform constellation that approximates the MB distribution.

The constellation mapper 209 produces the $V_1$ symbols 109 which is outputted by the distribution matcher 107. Said outputted V1 symbols 109 are then further modulated on a carrier wavelength to generate an optical signal to be transmitted.

The distribution matcher 107 allows advantageously to transform the informative data U1 103 into a non-uniform constellation of modulation symbols which permits to reach data rates that are near the theoretical limit of the transmission system.

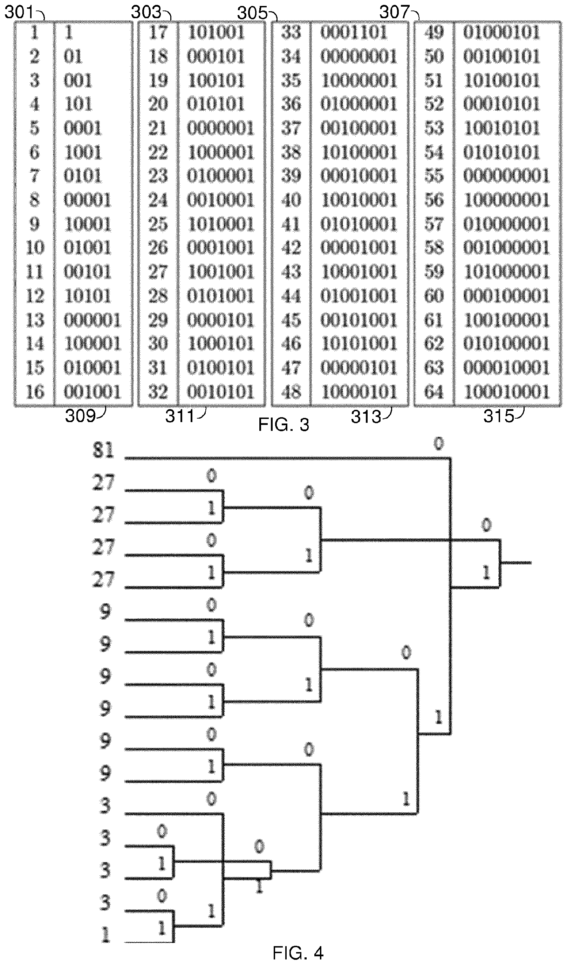

Referring to figure **FIG. 3,** a table of a codebook according to an embodiment of the invention is depicted.

In an embodiment, the codewords from the codebook are determined according to an inverse Fibonacci code. The codeword encoder 201 is configured with a Fibonacci/inverse Fibonacci coding scheme.

The columns 301, 303, 305, 307 of figure FIG. 3 depicts the list of Fibonacci codes or indexes produced by the codeword encoder 201. The columns 309, 311, 313 and 315 depict the list of codewords for different codebooks. The column 309 is a Fibonacci codebook of 16 codewords (FC(16)). The columns 309 and 311 are together a Fibonacci codebook of 32 codewords (FC(32)). The columns 309, 311, 313 and 315 are together a Fibonacci codebook of 64 codewords (FC(64)). The Fibonacci codebook of 16 codewords (column 309) comprises a smaller codebook of 8 codewords (FC(8)). FC stands for Fibonacci codebook, and the number in parenthesis designate the number of codewords into the Fibonacci codebook

The correspondence between columns is as follows:

- the Fibonacci index of column 301 correspond to the codebook of column 309,
- the Fibonacci index of column 303 correspond to the codebook of column 311,
- the Fibonacci index of column 305 correspond to the codebook of column 313,
- the Fibonacci index of column 307 correspond to the codebook of column 315.

The codeword encoder 201 is not limited to only FC(8), FC(16), FC(32) and FC(64) lookup tables, and may comprise more similarly built lookup tables. The codeword encoder 201 may also be configured with a smaller numbers of Fibonacci codebooks, for example only with FC(16).

The coding scheme from the codeword encoder 201 uses Fibonacci numbers of second order, starting from 1 and 2: 1, 2, 3, 5, 8, 13, 21, 34, 55, 89, 144, 233, etc.

A Fibonacci encoding process decomposes integers in the Fibonacci basis of second order. Examples of decomposition of integers 4 and 12 are as follows:

$$4 = 1+3 \rightarrow '101'$$
$$12 = 1+3+8 \rightarrow '10101'$$

In an example the integer 4 is decomposed into Fibonacci numbers 1 and 3. A '1' bit corresponding to the position of the Fibonacci number 1 in the sequence of Fibonacci number is set, and a '1' bit corresponding to the position of the Fibonacci number 3 in the sequence of Fibonacci numbers is set. For the unused Fibonacci numbers, a '0' bit is set. In the same manner, integer 12 is decomposed into Fibonacci numbers 1, 3 and 8. For each of these Fibonacci numbers a '1' bit is set at their respective position into the sequence of Fibonacci numbers.

In this Fibonacci encoding, no two consecutive ones occur, i.e. the pattern "11" does not exist in Fibonacci codewords. Therefore, when two consecutive ones appear in the input data stream, such as informative data U1 103, it indicates the beginning of a new Fibonacci codeword.

Fibonacci code properties are as follows:

- not a prefix code,
- uniquely decodable,
- a codeword always finishes with 1.
- two consecutive 1s are forbidden in a codeword.
- Large Fibonacci codebooks comprises smaller Fibonacci codebooks : the FC(8)⊂FC(16)⊂F(32)⊂FC(64). Advantageously, since FC are nested, only a single FC can be stored,
- In an example of a constellation shaping scheme using 8-ASK modulation, a small codebook such as FC(16) provides excellent matching to Maxwell-Boltzmann distribution. A rate about $R_{DM}$ = 0.7 * (m - 1) is achieved, where m comes from $M := 2^{m-1}$.
- The number of codewords or length of codebooks is a power of 2.

In the inverse Fibonacci encoding procedure, a run-length limited function is used. Considering FC(16), codewords cannot have more than five consecutives zeros (corresponding to the integer/Fibonacci index 13). Similarly, it is forbidden to have more than 4 consecutives zeros for FC(8), 6 for FC(32), and 8 for FC(64).

In an example the distribution matcher 107 configures the codeword encoder 201 with FC(16). Therefore, if 5 consecutive zeros are encountered at the distribution matcher 107 input, there exists no integer corresponding to them in the Fibonacci codebook. In such case, a run-length limited sub-routine is used: a one is added after the five first zeros. This procedure is invertible, at the decoder side, when five consecutive zeros are detected, the next bit set to one is removed and the original input data string is recovered. For the others FC, the run-length sub-routine is similar.

An example of the procedure of inverse Fibonacci encoding with FC(16) is provided hereinafter.
The distribution matcher 107 receives the following informative data U1 103:
100101010010010100000001101

The first step is to look for the longest Fibonacci codeword that fits at the start of the input data string. With FC(16), according to column 309, the length of the longest codeword is 6.
100101 01001001010000001101

The length-6 string 100101 does not correspond to a Fibonacci codeword. A shorter codeword is then searched and found:
1001 010100100100010000001101

The Fibonacci index 6 is associated to this codeword:
1001 010100100100010000001101

$$\underbrace{\phantom{xxxx}}$$
$$6$$

The same procedure is applied to process the remaining part of the input data string.

| 1001 | 0101 | 001001 | 01 | 0000001101 |
|------|------|--------|-----|------------|
| 6    | 7    | 16     | 2   |            |

At this step, there are 6 consecutive zeros which is not in the codebook. The run-length limited sub-routine is applied to split the long sequence of **0** with a 1.

| 1001 | 0101 | 001001 | 01 | **00000<u>1</u>01101** |
|------|------|--------|-----|------------|
| 6    | 7    | 16     | 2   |            |

The inverse encoding resumes:

| 1001 | 0101 | 001001 | 01 | 000001 | 01101 |
|------|------|--------|-----|--------|-------|
| 6    | 7    | 16     | 2   | 13     |       |

And then:

| 1001 | 0101 | 001001 | 01 | 000001 | 01 | 101 |
|------|------|--------|-----|--------|-----|-----|
| 6    | 7    | 16     | 2   | 13     | 2   | 4   |

Consequently, at the output (flow 203) of the inverse Fibonacci encoding, 10010101001001010000001101 (informative data U1 103) has been converted into Fibonacci indexes: 6, 7, 16, 2, 13, 2, 4. The produced flow 203 of Fibonacci indexes in then provided to the index mapper 205 for further processing.

Referring to figure **FIG. 4,** a schematic diagram of a tree of set of codes corresponding to another codebook according to an embodiment of the invention is depicted.

In an embodiment, the codewords from the codebook are determined according to a Huffman code. The codeword encoder 201 is configured with a Huffman encoding scheme.

The specific Huffman code is considered with the particular probability distribution p=3/4 and q=1/4 for the binary digits 0 and 1. Such distribution is very close to the final marginal distribution of 0s and 1s to be achieved. Advantageously this distribution is chosen because it yields a distribution that is as unequal as possible (i.e., $P(X=1) \ll P(X=0)$).

To construct the input distribution of the Huffman code, the probabilities of all symbols of length 4 given the distribution p=3/4 and q=1/4 are calculated. The computation of these probabilities are as follows:

- the probability to have the all-zero codeword is given by $(3/4)^4$,
- the probability to have the all-one codeword is given by $(1/4)^4$,
- a codeword including j zero bits has a probability equal to $(3/4)^j*(1/4)^{(4-j)}$.

Therefore the input distribution of the Huffman code is: D:={81/256, 27/256, 9/256, 3/256, 1/256}. Departing from this distribution, a Huffman encoding scheme can be derived.

The figure FIG. 4 depicts the tree of the Huffman code. The input distribution is sorted by decreasing order, the highest probability being on the top of tree. In figure FIG. 4, the input distribution is on the left of the tree. In order to ease readability of the tree, the denominator $4^4=256$ is not indicated on the left of the tree, only the numerator is visible.

The Huffman codebook is constructed by grouping two by two the least probable symbols:

- the two-lowest elements are grouped into leaves, creating a parent node with a probability that is the sum of the two lower elements' probabilities,
- the two elements are removed from the list and the new parent node is inserted into the list by decreasing probability.
- these steps are repeated until there is only one element left in the list.

To generate a Huffman code, the tree is parsed with the desired value, outputing a 0 every time a lefthand branch is taken, and a 1 every time a righthand branch is taken. In usual Huffman encoding, the tree is traversed backwards from the wanted code and build the binary Huffman encoding string backwards as well, since the first bit must start from the top.

This construction exhibits a very good performance and can achieve a rate up to $R_{DM}$ = 0.81 * ($m$ - 1), where m comes from M:=2^(m-1).

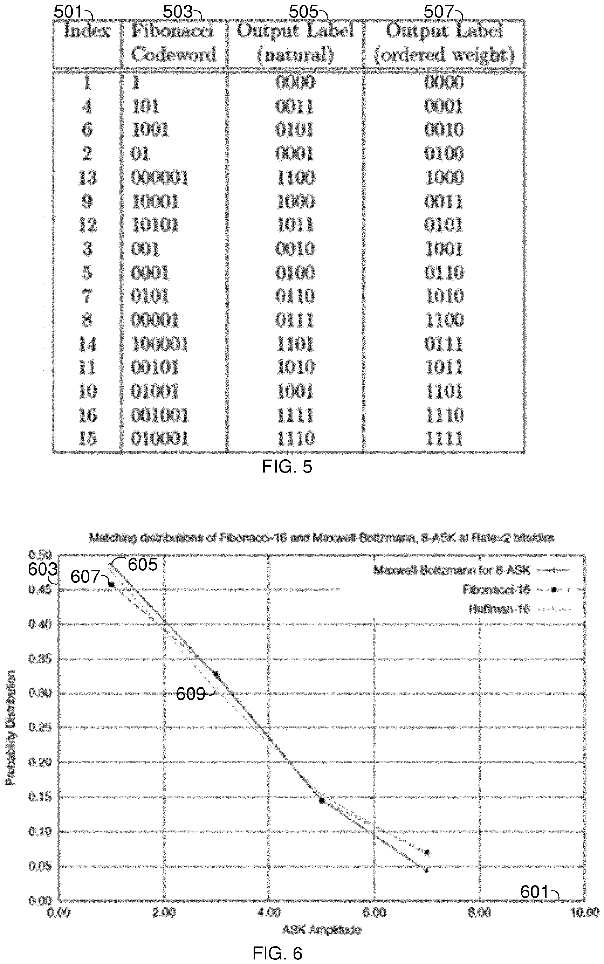

Referring to figure FIG. 5, a table of index corresponding to a codebook according to an embodiment of the invention is depicted.

In an embodiment, the distribution matcher 107 comprises the index mapper 205 and the constellation mapper 209 configured according to a process adapted to produce tables such as the table from figure FIG. 5. Said table from figure FIG. 5 provides examples and further details on the steps of mapping a codeword to an index, and mapping the index to a modulation symbol.

The column 501 corresponds to the Fibonacci indexes, which is associated to the column 503 of the Fibonacci codewords from FC(16). The column 505 provides output labels obtained from a direct or natural mapping, whereas the column 507 provides output labels ordered according to a set of weights. The table from figure FIG. 5 depicts indexes and codebooks related to the Fibonacci encoding scheme. A similar table may also be built to exemplify the indexes and codebooks related to the Huffman code tree.

In an embodiment, inverse Fibonacci and Huffman encoding are variable-length, i.e. the number of indexes generated at the output of the inverse coding process is not fixed. A further step is to force the output to have a fixed length as described hereinabove.

In another embodiment, in order to have a fine approximation of the MB distribution, the mapping between the inverse Fibonacci encoder output and the 8-ASK amplitudes is achieved in a specific manner by the constellation mapper 209. In the case Huffman code is used, a similar mapping between the output of the Huffman encoder and the 8-ASK amplitudes is also performed specifically by the constellation mapper 209. It is to be noted that the following considered 8-ASK modulation scheme, but other amplitude modulation scheme in case of probabilistic amplitude shaping techniques are also possible.

The index mapper 205 outputs a label of (m-1) bits associated to a Fibonacci index from the informative data U1 103. This label of (m-1) bits is converted into an ASK amplitude by the constellation mapper 209. The output labels for Fibonacci codewords of FC(16) are depicted in column 505 in natural binary numbering. An alternative numbering with an ordered Hamming weight is depicted in column 507. The probability distribution of the set of indexes of column 501 is invariant, whereas a permutation of output labels of column 507 or column 505 modifies the distribution of binary digits at the output.

The sub-steps to make the distribution matcher 107 performs an encoding on par with the MB distribution is as follows:

- initialize with list of codewords in order of decreasing probability,
- assign labels with increasing Hamming weight to the list,
- the processing complexity is reduced by splitting the list into two classes, e.g. 8 labels per class for the FC(16). Apply separate permutations to each class. In fact, to have the output distribution as close as possible to the optimal MB distribution, all mappings between the 16 Fibonacci/Huffman indexes and the 16 binary labels have to be tested. For that testing purpose, 16! = 2.092279e+13 permutations have to be computed (for a lookup table of 16 codewords). For reducing the number of processing operations, in an embodiment, separated permutations on the 8 indices having the highest probabilities are applied (these will dominate the matching of the output distribution and the MB distribution). For the 8 remaining indices a limited number of random permutations is performed and the result that returns the best matching is saved,
- find the minimum Kullback-Leibler divergence. The Kullback-Leibler divergence is a measure of the difference between two probability distributions. The Kullback-Leibler divergence between two distributions Q and P is defined by the expression:

$$D(P||Q) = \sum P(i)\log(\frac{P(i)}{Q(i)})$$

These sub-steps are applicable to the Huffman codebooks and the Fibonacci codebooks.

Referring to figure FIG. 6, a plot of probability distributions obtained according to embodiments of the invention is depicted.

The figure FIG. 6 provides results of the embodiments of the invention compared to the theoretical Maxwell-Boltzmann distribution. Probabilistic Amplitude Shaping with 8-ASK is considered. The distribution matcher 107 provides results when configured with inverse Fibonacci encoding and when configured with Huffman encoding. For both encoding schemes, the codebooks comprise 16 codewords.

The x-axis 601 is associated with the amplitude of the ASK modulation scheme. The y-axis 603 is associated with the probability distribution obtained with the MB distribution, the FC(16) and the Huffman encoding.

The plain curve 605 corresponds to the theoretical MB distribution.

The curve 607 with the dots corresponds to the performances obtained with the FC(16) configuration.

The curve 609 with the cross corresponds to the performances obtained with the Huffman encoding configuration.

The curves 607 and 609 indicate that the performances of the distribution matcher 107, configured either with the inverse Fibonacci encoding or the Huffman encoding, are closed to the MB distribution.

The distribution matcher 107 allows to reach the MB distribution thanks to the processing of the codeword mapper, the index mapper and the constellation mapper. Advantageously these blocks are efficient in terms of computing implementation. In an example the use of inverse Fibonacci encoding or Huffman encoding allows to efficiently implement the distribution matcher 107 on an ASIC processor or a FPGA chip. Said efficient implementation enables the distribution matcher 107 as a cost-effective and performing solution.

The functions of the various elements shown in the set of figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

**Claims**

1. A method for generating an optical signal, said optical signal comprising a sequence of bits, the method comprising the steps of:

    - mapping a block of bits (103) from the sequence of bits to a codeword comprised in a codebook (309), said codebook (309) comprising codewords of variable length, said codeword corresponding uniquely to said block of bits,
    - mapping the codeword to an index comprised in a set of indexes (301), the set of indexes being ordered according a probability of transmission of the codewords (501),
    - mapping the index to a modulation symbol from a set of modulation symbols (505;507),
    - modulating a carrier wavelength with the modulation symbol to generate the optical signal.

2. A method for generating an optical signal according to claim 1, wherein the step of mapping the codeword to the index further comprises the step of ordering the set of indexes according to a decreasing or increasing probability of transmission of each of the codewords from the codebook.

3. A method for generating an optical signal according to claim 2, wherein the step of mapping the index to a modulation symbol further comprises the step of associating a set of weights to the set of modulation symbols (507), each weight of the set of weights corresponding to each of the modulation symbol of the set of modulation symbols, and said set of weights ordering the set of modulation symbols.

4. A method for generating an optical signal according to claim 3, wherein the set of weights comprises ordered Hamming weights.

5. A method for generating an optical signal according to claim 3 or claim 4, wherein the step of mapping the codeword to the index further comprises a step of partitioning the set of weights into at least a first subset of weights and a second subset of weights, the first subset of weights comprising the weights associated with higher probability of transmission of the codewords from the codebook, the second subset of weights comprising weights associated with lower probability of transmission of codewords from the codebook.

6. A method for generating an optical signal according to any of the claims 1 to 5, wherein the codewords from the codebook are determined according to an inverse Fibonacci encoding scheme (301; 309).

7. A method for generating an optical signal according to claim 6, wherein the number of codewords comprised in the codebook is equal to a power of 2.

8. A method for generating an optical signal according to any of the claims 6 to 7, wherein if a number of consecutive zero bits from the block of bits is greater than a threshold, a one bit is inserted after the consecutive zero bits.

9. A method for generating an optical signal according to any of the claims 1 to 5, wherein the codewords from the codebook are determined according to a Huffman encoding scheme.

10. A method for generating an optical signal according to claim 9, wherein the number of codewords comprised in the codebook is equal to a power of 2.

11. An optical transmitter for transmitting a sequence of bits, said optical transmitter comprising a distribution matcher (107) adapted for:

    - mapping a block of bits (103) from the sequence of bits to a codeword comprised in a codebook (309), said codebook (309) comprising codewords of variable length, said codeword corresponding uniquely to said block of bits,
    - mapping the codeword to an index comprised in a set of indexes, the set of indexes being ordered according a probability of transmission of the codewords,
    - mapping the index to a modulation symbol,
    - modulating a carrier wavelength with the modulation symbol to generate an optical signal,

the optical transmitter further comprising a transmitting module for transmitting the optical signal.

**12.** An optical receiver for receiving a block of bits, said optical receiver comprising:

- a demodulation unit for demodulating a portion of an optical signal into a demodulated symbol,
- mapping the demodulated symbol to an index comprised in a set of indexes, the set of indexes being ordered according a probability of transmission of codewords from a codebook, said codebook comprising codewords of variable length,
- mapping a codeword from the codebook to the index,
- mapping the codeword to the block of bits, said codeword corresponding uniquely to said block of bits.

FIG. 1

FIG. 2

| 301 | | 303 | | 305 | | 307 | |
|---|---|---|---|---|---|---|---|
| 1 | 1 | 17 | 101001 | 33 | 0001101 | 49 | 01000101 |
| 2 | 01 | 18 | 000101 | 34 | 00000001 | 50 | 00100101 |
| 3 | 001 | 19 | 100101 | 35 | 10000001 | 51 | 10100101 |
| 4 | 101 | 20 | 010101 | 36 | 01000001 | 52 | 00010101 |
| 5 | 0001 | 21 | 0000001 | 37 | 00100001 | 53 | 10010101 |
| 6 | 1001 | 22 | 1000001 | 38 | 10100001 | 54 | 01010101 |
| 7 | 0101 | 23 | 0100001 | 39 | 00010001 | 55 | 000000001 |
| 8 | 00001 | 24 | 0010001 | 40 | 10010001 | 56 | 100000001 |
| 9 | 10001 | 25 | 1010001 | 41 | 01010001 | 57 | 010000001 |
| 10 | 01001 | 26 | 0001001 | 42 | 00001001 | 58 | 001000001 |
| 11 | 00101 | 27 | 1001001 | 43 | 10001001 | 59 | 101000001 |
| 12 | 10101 | 28 | 0101001 | 44 | 01001001 | 60 | 000100001 |
| 13 | 000001 | 29 | 0000101 | 45 | 00101001 | 61 | 100100001 |
| 14 | 100001 | 30 | 1000101 | 46 | 10101001 | 62 | 010100001 |
| 15 | 010001 | 31 | 0100101 | 47 | 00000101 | 63 | 000010001 |
| 16 | 001001 | 32 | 0010101 | 48 | 10000101 | 64 | 100010001 |
| 309 | | 311 | | 313 | | 315 | |

FIG. 3

FIG. 4

| Index | Fibonacci Codeword | Output Label (natural) | Output Label (ordered weight) |
|-------|--------------------|-----------------------|------------------------------|
| 1 | 1 | 0000 | 0000 |
| 4 | 101 | 0011 | 0001 |
| 6 | 1001 | 0101 | 0010 |
| 2 | 01 | 0001 | 0100 |
| 13 | 000001 | 1100 | 1000 |
| 9 | 10001 | 1000 | 0011 |
| 12 | 10101 | 1011 | 0101 |
| 3 | 001 | 0010 | 1001 |
| 5 | 0001 | 0100 | 0110 |
| 7 | 0101 | 0110 | 1010 |
| 8 | 00001 | 0111 | 1100 |
| 14 | 100001 | 1101 | 0111 |
| 11 | 00101 | 1010 | 1011 |
| 10 | 01001 | 1001 | 1101 |
| 16 | 001001 | 1111 | 1110 |
| 15 | 010001 | 1110 | 1111 |

501  503  505  507

FIG. 5

Matching distributions of Fibonacci-16 and Maxwell-Boltzmann, 8-ASK at Rate=2 bits/dim

FIG. 6

**EUROPEAN SEARCH REPORT**

Application Number

EP 18 30 5381

| | | Europäisches Patentamt European Patent Office Office européen des brevets | | | |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 02/15443 A1 (BROADCOM CORP [US])<br>21 February 2002 (2002-02-21)<br>* abstract *<br>* page 1, line 15 - page 3, line 25 *<br>* page 5, line 27 - page 6, line 28 *<br>* page 9, line 24 - page 10, line 6 *<br>* page 12, line 8 - page 13, line 28 *<br>* figures 1, 2, 6, 7 *<br>----- | 1,2,9-12<br><br>6,7 | INV.<br>H04B10/516<br>H03M7/40<br>H04L27/34 |
| X | KSCHISCHANG F R ET AL: "OPTIMAL NONUNIFORM SIGNALING FOR GAUSSIAN CHANNELS",<br>IEEE TRANSACTIONS ON INFORMATION THEORY,<br>IEEE PRESS, USA,<br>vol. 39, no. 3, 1 May 1993 (1993-05-01),<br>pages 913-929, XP000383031,<br>ISSN: 0018-9448, DOI: 10.1109/18.256499<br>* abstract *<br>* Section I *<br>* Sections VII to IX *<br>* figures 5-7 *<br>----- | 1,2,9-12 | |
| X | WEI MAO ET AL: "Lattice codes for amplified direct-detection optical systems",<br>IEEE TRANSACTIONS ON COMMUNICATIONS, IEEE SERVICE CENTER, PISCATAWAY, NJ. USA,<br>vol. 56, no. 7, 1 July 2008 (2008-07-01),<br>pages 1137-1145, XP011231541,<br>ISSN: 0090-6778, DOI:<br>10.1109/TCOMM.2008.040340<br>* Section I *<br>* Section IV.A *<br>* Table II *<br>----- | 1,2,9-12 | TECHNICAL FIELDS SEARCHED (IPC)<br>H04B<br>H03M<br>H04L |

-/--

The present search report has been drawn up for all claims

| Place of search | Date of completion of the search | Examiner |
|---|---|---|
| Munich | 13 September 2018 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 30 5381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 216 423 A (MUKHERJEE AMAR [US]) 1 June 1993 (1993-06-01) * column 1, line 6 - column 2, line 5 * * column 3, lines 10-15 * * column 4, lines 45-49 * * figures 1, 5 * ----- | 6,7 | |

TECHNICAL FIELDS
SEARCHED        (IPC)

The present search report has been drawn up for all claims

| Place of search | Date of completion of the search | Examiner |
|---|---|---|
| Munich | 13 September 2018 | Rolan Cisneros, E |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 18 30 5381

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2018

| Patent document cited in search report | | Publication date | Patent family member(s) | | Publication date |
|---|---|---|---|---|---|
| WO 0215443 | A1 | 21-02-2002 | AU | 8480501 A | 25-02-2002 |
| | | | EP | 1323252 A1 | 02-07-2003 |
| | | | US | 2002044073 A1 | 18-04-2002 |
| | | | US | 2005271139 A1 | 08-12-2005 |
| | | | US | 2009141791 A1 | 04-06-2009 |
| | | | US | 2010246661 A1 | 30-09-2010 |
| | | | WO | 0215443 A1 | 21-02-2002 |
| US 5216423 | A | 01-06-1993 | NONE | | |

EPO FORM P0459

For more details about this annex : see Official Journal of the European Patent Office, No. 12/82